# EUROPÄISCHE PATENTANMELDUNG

(11) **EP 0 605 861 A2**
(43) Veröffentlichungstag der Anmeldung: **13.07.1994**
(21) Anmeldenummer: 93120911.8
(22) Anmeldetag: 27.12.1993
(51) Int. Cl.: C08L 77/00, C08K 3/22, C08K 7/14

(54) **Halogenfreie flammwidrige Polyamidformmassen**

(30) Priorität: 07.01.1993 DE 4300261; 11.01.1993 DE 4300451; 26.03.1993 DE 4309965; 15.07.1993 DE 4323676
(71) Anmelder: BAYER AG, 51368 Leverkusen (DE)
(72) Erfinder: Reinking, Klaus, Dr., D-42929 Wermelskirchen (DE); El Sayed, Aziz, Dr., D-51375 Leverkusen (DE)

(57) **Zusammenfassung**

Die Erfindung betrifft halogenfreie flammwidrige thermo- plastische Polyamidformmassen aus 10 bis 60 Gew.-% Polyamid, 2 bis 30 Gew.-% thermoplastischen aromatischen Polymeren, 10-50 Gew.-% Magnesiumhydroxid als flammwidrig machende Komponente und gegebenenfalls 10 bis 50 Gew.-% Glasfasern.

## Beschreibung

Die Erfindung betrifft halogenfieie flammwidrige thermoplastische Polyamidformmassen aus 10 bis 60 Gew.-% Polyamid, 2 bis 30 Gew.-% thermoplastischen aromatischen Polymeren, 10-50 Gew.-% Magnesiumhydroxid als flammwidrig machende Komponente und 10 bis 50 Gew.-% Glasfasern.

Polyamide, insbesondere glasfaserverstärkte Polyamide, werden als Formmassen in großen Mengen erfolgreich eingesetzt, z.B. im Maschinenbau, der Elektrotechnik oder der Haushaltsgerätetechnik. Dabei besteht häufig die Notwendigkeit, die Polyamide so flammwidrig auszurüsten, daß sie den technischen Anforderungen von Brennbarkeitsprüfungen, z.B. dem Test nach UL 94 (Underwriter Laboratories USA) bestehen. Dazu verwendet man verschiedene Flammschutzmittel, von denen jedes jedoch spezifische Nachteile mitbringt.

Bekannte Flammschutzmittel sind roter Phosphor, organische Halogenverbindungen oder Melaminsalze.

Roter Phosphor wird vorwiegend in glasfaserverstärktem Polyamid 66 eingesetzt (siehe z.B. DE 3 713 746 A1, EP-A 299 444). Wegen der rotbraunen Eigenfarbe des Phosphors können damit ausgerüstete Polyamide nur in dunklen Farben geliefert werden. Außerdem neigen sie bei der Einwirkung von Feuchtigkeit und Wärme zur Bildung von Phosphin und Phosphaten. Phosphin ist toxikologisch bedenklich und korrodiert zudem die kupferhaltigen Kontakte in elektrischen Geräten. Die so entstandenen Korrosionsschichten sind elektrisch isolierend und können sich daher beim Stromdurchgang aufheizen, sodaß dies im Extremfall zum Ausfall des Gerätes führen kann.

Als Flammschutzmittel für Polyamide werden folgende organische Halogenverbindungen eingesetzt:
- Bromierte Diphenyle und Diphenylether in Kombination mit Antimontrioxid
- Chlorierte cycloaliphatische Kohlenwasserstoffe
- Bromierte Sryrol-Oligomere
- Kernbromierte Polystyrole
Als Synergisten verwendet man zusätlich Zinksalze oder Eisenoxide.

Die meisten halogenhaltigen Flammschutzmittel beginnen, sich bei den Verarbeitungstemperaturen der Polyamide zu zersetzen. Dabei bilden sich korrodierend wirkende Gase, die die elektrischen Kontakte in Geräten und Installationen zerstören.

Melaminsalze haben sich als Flammschutzmittel nur für unverstärkte Polyamide bewährt. Damit ausgerüstete Polyamidehaben helle Eigenfarben und besitzen gute elektrischeEigenschaften. Ein Nachteil ist jedoch die relativ niedrige Zersetzungstemperatur der Melaminsalze.

Ein weiteres Flammschutzmittel, das in Polyamiden eingesetzt werden kann, ist Magnesiumhydroxid.

Die Verwendung von Magnesiumhydroxid als Flammschutzmittel für Thermoplaste ist seit längerem bekannt. (Plastics and Rubber Processing and Applications 6(1986) S. 169-175). Die Konzentration, in der Magnesiumhydroxid in einem Thermoplasten eingesetzt werden muß, damit dieser flammwidrig wird, d.h. z.B. die Brennbarkeitsprüfung nach UL 94 in der Klasse V 0 besteht, hängt von der inhärenten Flammwidrigkeit des betreffenden Thermoplasten ab. Ist diese, wie bei den Polyolefinen, sehr niedrig, so sind hohe Magnesiumhydroxid-Konzentrationen erforderlich. Diese betragen beispielsweise beim Polypropylen mindestens 60 Gewichts-%, bei EPDM-Kautschuken mindestens 70 Gewichts-%. Aliphatische Polyamide und Copolyamide wie die Polyamide 6, 66, 610, 11 oder 12 besitzen ebenfalls nur sehr geringe inhärente Flammwidrigkeiten. Um sie flammwidrig einzustellen bedarf es daher ebenfalls sehr hoher Magnesiumhydroxid-Konzentrationen, die z.B. beim Polyamid 6 bei mindestens 55 Gewichts-% liegt.

Die Notwendigkeit, Magnesiumhydroxid in derartig hohen Konzentrationen einarbeiten zu müssen, bedeutet jedoch, daß einige Nachteile in Kauf genommen werden müssen.

So ist die Einarbeitung des Magnesiumhydroxids, die üblicherweise so erfolgt, daß das Magnesiumhydroxid in einem Doppelwellenextruder in die Polyamidschmelze dosiert wird, umso schwieriger, je höher die angestrebte Magnesiumhydroxid-Konzentration ist. Zusätzlich wird die Einarbeitung mit steigenden Magnesiumhydroxid-Konzentrationen unwirtschaftlicher, da eine einwandfieie Dispergierung des Magnesiumhydroxids in den Polyamidschmelzen bei hohen Konzentrationen nur dann möglich ist, wenn mit niedrigen Extrusionsraten gefahren wird. Dies hängt u.a. damit zusammen, daß die Magnesiumhydroxidpartikel von den Polyamidschmelzen schlecht benetzt werden. Aus diesem Grunde setzt man den Compoundieransätzen größere Mengen ungesättigter Metallseifen zu (JP-A 12 943/1978), verwendet mit Alkalioleat beschichtetes Magnesiumhydroxid (EP 0 052 868) oder setzt den Ansätzen zusätzlich noch mit Maleinsäureanhydrid funktionalisierte Polyolefine zu (EP 0 335 165). Jede dieser Maßnahmen führt jedoch zu Beeinträchtigungen der technischen Eigenschaften der Polyamide.

Weiterhin schränken hohe Magnesiumhydroxid-Konzentrationen die Möglichkeiten ein, zur Verbesserung der mechanischen Eigenschaften und zur Erhöhung der Wärmeformbeständigkeit der Polyamid-Magnesiumhydroxid-Compounds bei deren Herstellung noch zusätzlich faserförmige Verstärkungsstoffe, z.B. Glasfasern, einzuarbeiten.

Aus diesen Gründen ist es erstrebenswert, halogenfreie flammwidrige Formmassen aus Polyamiden und Magnesiumhydroxid zu entwickeln, in denen die Magnesiumhydroxid-Konzentrationen möglichst niedrig sind.

Diese Aufgabe wurde dadurch gelöst, daß in die Polyamide zusätzlich zum Magnesiumhydroxid und gegebenenfalls zu den Glasfasern thermoplastische aromatische Polymere eingearbeitet wurden.

Gegenstand der vorliegenden Erfindung sind daher halogenfreie flammwidrige thermoplastische Formmassen, bestehend aus:
A) von 10 bis 60, bevorzugt von 20 bis 45 Gew.-%, Polyamid,
B) von 2 bis 30, bevorzugt von 5 bis 25 Gew.-%, thermoplastische aromatische Polymere,
C) von 10 bis 50, bevorzugt von 20 bis 40 Gew.-%, Magnesiumhydroxid,
D) von 5 bis 50, bevotrugt von 10 bis 30 Gew.-%, Glasfasern, wobei die Summe der Komponenten A bis D 100 Gew.-% ergibt.

Diese erfindungsgemäßen Formmassen sind flammwidrig, ohne die Nachteile des oben erwähnten roten Phosphors oder der halogenhaltigen Flammschutzmittel enthaltenden Polyamide aufzuweisen.

Die Polyamide der erfindungsgemäßen Formmassen sind sowohl teilkristalline wie auch amorphe Polyamide, die nach bekannten Polykondensationsverfahren ausgehend von Diaminen und Dicarbonsäuren und/oder Lactamen mit wenigstens 5 Ringgliedern oder entsprechenden -Aminosäuren hergestellt werden können. Als Ausgangsprodukte kommen aliphatische und aromatische Dicarbonsäuren wie Adipinsäure, 2,2,4- und 2,4,4-Trimethyladipinsäure, Azelainsäure, Sebazinsäure, Decandicarbonsäure, Dodecandicarbonsäure, Isophthalsäure, Terephthalsäure, aliphatische und aromatische Diamine wie Hexamethylendiamin, 2,2,4- und 2,4,4-Trimethylhexamethylendiamin, die isomeren Diamino-dicyclohexylmethane, Diamino-dicyclohexyl-propane, Isophorondiamin, die isomeren Xylylendiamine, Bis-aminomethyl-cyclohexan, Aminocarbonsäuren wie -Aminocapronsäure, -Aminoundecansäure, -Aminolaurinsäure bzw. die entsprechenden Lactame in Betracht. Copolyamide aus mehreren der genannten Monomeren sind eingeschlossen.

Thermoplastische aromatische Polymere im Sinne der vorliegenden Erfindung sind z.B. Polyarylensulfide, vorzugsweise Poly-p-phenylensulfid, Polyarylenether, aromatische Polysulfone und aromatische Polyetherimide. Derartige thermoplastische aromatische Polymere sind im Handel erhältlich, beispielsweise unter folgenden Handelsnamen:
- Polyphenylensulfid:: Ryton®, Fortron® (Phillips Petroleum/Hoechst)
- Polyarylenether:: PPO und PPE (GE und BASF)
- Polysulfone:: Ultrason® S und Ultrason® E (BASF)
- Polyetherimid:: Ultem® (GE)
- aromatische Polyamide:: Amodel® (AMOCO), Ultramid 6 T (BASF)
Für die erfindungsgemäßen flammwidrigen Formmassen kommt jede Form von Magnesiumhydroxid in Betracht. Besonders geeignet sind jedoch Magnesiumhydroxide mit einer plättchenförmigen Gestalt der Partikel und einer spezifischen Oberfläche von 10-12 m²/g, Schließlich kann eine Vorbehandlung der Magnesiumhydroxidpartikel zur Verbesserung der Haftung zur Polyamid/Polyarylensulfid- Matrix angebracht sein.

Geeignete Magnesiumhydroxid-Typen sind im Handel, z.B. unter den Namen Magnifin® H 10 der Firma Martinswerk, Bergheim, Kisuma® E 5 der Firma Kyowa, Tokyo, oder Ankermag® H 999 der Firma Veit'sche Magnesitwerke, Leoben.

Die erfindungsgemäßen Formmassen können zusätzlich weitere faserförmige Verstärkungsstoffe und/oder mineralische Füllstoffe enthalten. Als faserförmige Verstärkungsstoffe neben Glasfasern kommen Kohlefasern, Aramidfasern, Mineralfasern und Whisker in Betracht. Als geeignete mineralische Füllstoffe seien beispielhaft Kalziumcarbonat, Dolomit, Kalziumsulfat, Glimmer, Talkum und Kaolin genannt. Zur Verbesserung der mechanischen Eigenschaften können die faserförmigen Verstärkungsstoffe und die mineralischen Füllstoffe oberflächenbehandelt sein.

Darüber hinaus können die erfindungsgemäßen flammwidrigen Formmassen weitere Additive zur Verbesserung ihrer technologischen Eigenschaften enthalten. Derartige Additive sind Pigmente, Hitze- und Witterungsstabilisatoren, Entformungs- und Fließhilfsmittel.

Die Herstellung der erfindungsgemäßen flammwidrigen Formmassen erfolgt hauptsächlich in der Weise, daß Mischungen aus Polyamiden und Polyarylensulfiden zunächst in Extrudern oder Knetern geschmolzen werden und daß dann Magnesiumhydroxid, gegebenenfalls Glasfasern und gegebenenfalls weitere Verstärkungs- und Füllstoffe und/oder weitere Additive in diese Schmelzen dosiert werden, in denen sie unter der Einwirkung von Scherkräften homogen dispergiert werden.

Die Verarbeitung der erfindungsgemäßen flammwidrigen Formmassen zu Formteilen erfolgt üblicherweise durch Spritzgießen, ihre Verarbeitung zu Profilen durch Extrudieren.

Weiterer Gegenstand der Erfindung ist die Verwendung der erfindungsgemäßen Formmassen zur Herstellung von Formkörpern sowie Formkörper hergestellt aus den erfindungsgemäßen Formmassen.

### Beispiele

Die folgenden Beispiele zeigen, daß die Flammwidrigkeit von Formmassen aus Polyamid 6, Glasfasern und Magnesiumhydroxid durch Poly-p-phenylensulfid entscheidend verbessert werden kann, und daß es mit Hilfe von z.B. Poly-p-phenylensulfid möglich ist, auch bei niedrigen Magnesiumhydroxid-Konzentrationen Flammwidrigkeit der Formmassen zu erreichen.

Für die Beispiele wurden folgende Ausgangskomponenten verwendet:
- Polyamid 6: Durethan® B 31 F (Bayer AG; rel. Viskosität: 3 Pa.s, gemessen in 1 %iger Metakresollösung)
- Poly-p-phenylensulfid: lineares Polyphenylensulfid, rel. Viskosität ηᵣₑₗ = 65 Pa.s (bei 1000 s⁻¹)
- Glasfasern: Bayer Glas 7919, mittl. Durchmesser 11 µm; mittl. Länge: 4,5 µm
- Magnesiumhydroxid:Magnifin H 10 (Martinswerk), Glühverlust (1100°C) 40 %
Die Herstellung der beispielhaften Formmassen erfolgte in der Weise, daß Mischungen aus Polyamid 6 und Poly-p-phenylensulfid in einem Doppelwellenextruder (ZSK 32 der Fa. Werner & Pfleiderer) geschmolzen wurden und daß die Glasfasern und das Magnesiumhydroxid anschließend in die Schmelze dosiert wurden. Aus den so erhaltenen Formmassen wurden Rundstränge extrudiert, die anschließend granuliert wurden. Aus den Granulaten wurden bei Schmelzetemperaturen von ca. 300°C ASTM-Stäbe, Dicke 1,6 mm, gespritzt, an denen die Brennbarkeitsprüfung nach UL 94 durchgeführt wurde.

Die Zusammensetzungen der beispielhaften Formmassen sowie die Ergebnisse der Brennbarkeitsprüfungen sind in den folgenden Tabellen aufgeführt.

**Tabelle 1**

| | | Ver gleich | | | Ver gleich | | | Ver gleich | | |
|---|---|---|---|---|---|---|---|---|---|---|
| Beispiel | | 1 | 2 | 3 | 4 | 5 | 6 | 7 | 8 | 9 |
| Polyamid 6 | Gew.-% | 40 | 28 | 16 | 40 | 32 | 28 | 40 | 36 | 32 |
| Polyphenylensulfid | Gew.-% | - | 12 | 24 | - | 8 | 12 | - | 4 | 8 |
| Mg-Hydroxid | Gew.-% | 20 | 20 | 20 | 30 | 30 | 30 | 40 | 40 | 40 |
| Glasfaser | Gew.-% | 40 | 40 | 40 | 30 | 30 | 30 | 20 | 20 | 20 |
| Brennbarkeit nach UL 94 1,6 mm | | n.b. | V 1 | V 0 | nb | V 1 | V 0 | V 1 | V 0 | V 0 |
| n.b. = Brennbarkeitstest nicht bestanden | | | | | | | | | | |

## Patentansprüche

1. Halogenfreie flammwidrige thermoplastische Formmassen, bestehend aus:
A) von 10 bis 60 Gew.-% Polyamid,
B) von 2 bis 30 Gew.-% thermoplastische aromatische Polymere
C) von 10 bis 50 Gew.-% Magnesiumhydroxid,
D) von 5 bis 50 Gew.-% Glasfasern,
wobei die Summe der Komponenten A bis D 100 Gew.-% ergibt.

2. Formmassen gemäß Anspruch 1, dadurch gekennzeichnet, daß sie
A) von 20 bis 45 Gew.-% Polyamid,
B) von 5 bis 25 Gew.-% thermoplastische aromatische Polymere,
C) von 20 bis 40 Gew.-% Magnesiumhydroxid und
D) von 10 bis 30 Gew.-% Glasfasern enthalten.

3. Formmassen nach Anspruch 1, dadurch gekennzeichnet, daß das thermoplastische aromatische Polymer ein Polyarylensulfid, Polyarylenether, Polysulfon, Polyetherimid oder ein aromatisches Polyamid ist.

4. Formmassen nach Anspruch 3, dadurch gekennzeichnet, daß das thermoplastische aromatische Polymer ein Poly-p-phenylensulfid ist

5. Formmassen nach Ansprüchen 1 bis 4, dadurch gekennzeichnet, daß das Polyamid ein teilkristallines aliphatisches Homo- oder Copolyamid ist.

6. Formmassen nach Ansprüchen 1 bis 5, dadurch gekennzeichnet, daß sie zusätzlich weitere faserförmige Verstärkungsstoffe enthalten, wobei die Summe aus deren Konzentrationen und den Konzentrationen der Komponenten C) und gegebenenfalls D) weniger als 80 Gew.-%, bezogen auf die gesamte Formmasse, ausmacht.

7. Formmassen nach Ansprüchen 1 bis 6, dadurch gekennzeichnet, daß sie zusätzlich weitere mineralische Füllstoffe enthalten, wobei die Summe aus deren Konzentrationen und den Konzentrationen der Komponenten C) und gegebenenfalls D) weniger als 80 Gew.-%, bezogen auf die gesamte Formmasse, ergibt.

8. Verwendung der Formmassen gemäß den Ansprüchen 1 bis 7 zur Herstellung geformter Körper.

9. Formkörper hergestellt aus Formmassen gemäß den Ansprüchen 1 bis 7.
